Europäisches Patentamt

European Patent Office

Office européen des brevets

(19)

(11) Numéro de publication : **0 283 388 B1**

(12)

# FASCICULE DE BREVET EUROPEEN

(45) Date de publication du fascicule du brevet :
16.10.91 Bulletin 91/42

(51) Int. Cl.⁵ : **B07C 5/18, G01G 11/00**

(21) Numéro de dépôt : 88400565.3

(22) Date de dépôt : 10.03.88

(54) **Ensemble de calibrage de produits, tels que des fruits.**

(30) Priorité : 11.03.87 FR 8703344

(43) Date de publication de la demande :
21.09.88 Bulletin 88/38

(45) Mention de la délivrance du brevet :
16.10.91 Bulletin 91/42

(84) Etats contractants désignés :
AT BE CH DE ES FR GB GR IT LI LU NL SE

(56) Documents cités :
EP-A- 185 424
EP-A- 208 024
FR-A- 1 238 102

(56) Documents cités :
FR-A- 1 306 353
GB-A- 878 320
GB-A- 1 395 868
GB-A- 2 140 164

(73) Titulaire : XEDA INTERNATIONAL
58 rue Pottier
F-78150 Le Chesnay (FR)

(72) Inventeur : D'Urso, Carmelo
9, square de Tocqueville
F-78150 Le Chesnay (FR)

(74) Mandataire : Bressand, Georges et al
c/o CABINET LAVOIX 2 Place d'Estienne
d'Orves
F-75441 Paris Cédex 09 (FR)

## Description

La présente invention concerne un ensemble de calibrage de produits, tels que des fruits.

Dans l'état de la technique, ces ensembles de calibrage sont constitués par des transporteurs à godets dans lesquels sont placés des fruits par exemple par l'intermédiaire de dispositifs d'alimentation automatique.

On connait par exemple du document EP-A-185 424, un ensemble de calibrage de produits, tels que des fruits, comportant des premiers moyens de transport à brins parallèles comportant des alvéoles en forme de godets et dans lequels sont disposés les produits, un poste de pesage comportant des moyens de pesage supportés par un dispositif de pesage du produit, un poste de calibrage comprenant plusieurs stations d'éjection des produits, des premiers moyens de transport dans des moyens d'évacuation des produits en fonction du poids de ceux-ci.

Les godets sont reliés aux transporteurs de manière à pouvoir être pesés librement lors du passage de ceux-ci dans une première partie de l'ensemble et pivoter au moment du déchargement du fruit contenu dans le godet pour son calibrage.

Le poids du fruit est obtenu par soustraction automatique du poids du godet, du poids de l'ensemble godet-fruit tel que mesuré, ce qui permet ensuite de commander les moyens de déchargement des godets afin que les fruits soient classés par catégorie de poids.

Cependant, ces dispositifs présentent un certain nombre d'inconvénients dont le plus important réside dans le fait qu'on ne peut pas éliminer de la mesure, les effets de la friction provenant du fait que le godet est pesé en mouvement pendant le transport et que, de plus, les vibrations engendrées par ce mouvement, interfèrent avec la pesée et diminuent la précision de celle-ci.

Le but de l'invention est donc de résoudre ces problèmes en proposant un ensemble de calibrage qui soit simple, fiable, d'un prix de revient peu élevé mais qui permette d'obtenir une meilleure précision de la mesure du poids des produits et donc un meilleur calibrage de ceux-ci.

A cet effet, l'invention a pour objet un ensemble de calibrage de produits, tels que des fruits, comportant des premiers moyens de transport à brins parallèles comportant des alvéoles, et dans lesquels sont disposés les produits, un poste de calibrage comprenant plusieurs stations d'éjection des produits, les premiers moyens de transport transportant les produits dans des moyens d'évacuation des produits en fonction du poids de ceux-ci, caractérisé en ce que les alvéoles sont ouvertes dans leur partie inférieure, en ce que les moyens de pesage sont entraînés par un motoréducteur, une portion de ces moyens de pesage faisant saillie dans les alvéoles de manière à porter le produit lors de son passage dans le poste de pesage et en ce que le motoréducteur est supporté par le dispositif de pesage du produit.

Avantageusement, l'ensemble selon l'invention comporte également des seconds moyens de transport de produits et des moyens de transfert desdits produits des seconds moyens de transport dans les alvéoles des premiers moyens de transport.

L'invention sera mieux comprise à l'aide de la description qui va suivre, donnée uniquement à titre d'exemple et faite en se référant aux dessins annexés, sur lesquels :

— la Fig. 1 représente une vue schématique d'un ensemble de calibrage selon l'invention ;

— la Fig. 2 représente un schéma synoptique illustrant le fonctionnement de l'ensemble de calibrage selon l'invention ;

— la Fig. 3 représente une vue partielle des seconds moyens de transport et d'une roue de transfert entrant dans la constitution d'un ensemble selon l'invention ;

— la Fig. 4 représente une vue partielle des premiers moyens de transport et d'une roue de pesage entrant dans la constitution d'un ensemble selon l'invention ;

— la Fig. 5 illustre le fonctionnement des moyens d'éjection entrant dans la constitution d'un ensemble selon l'invention ;

— les Fig. 6, 7, 8 et 9 illustrent les différentes étapes du retournement d'un fruit dans un ensemble selon l'invention ;

— la Fig. 10 représente une variante de réalisation des premiers moyens de transport et d'une roue de pesage entrant dans la constitution d'un ensemble selon l'invention ;

— La Fig. 11 représente une autre variante de réalisation des moyens de pesage entrant dans la constitution d'un ensemble selon l'invention ; et

— la Fig. 12 représente un autre mode de réalisation de moyens de transport entrant dans la constitution d'un ensemble selon l'invention.

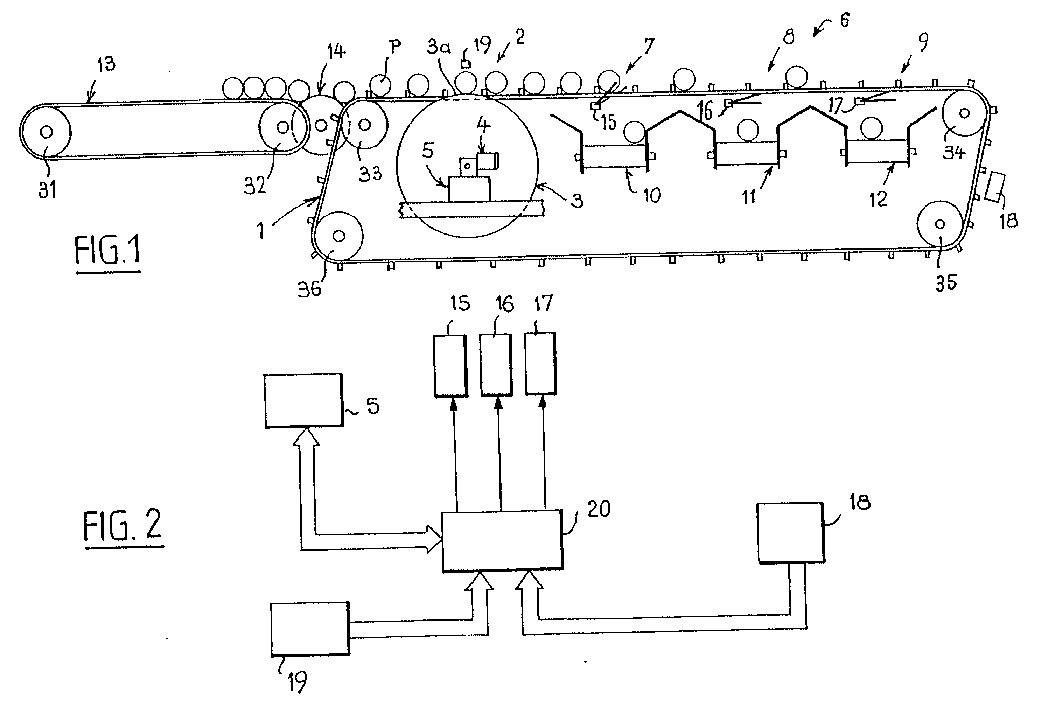

Ainsi qu'on peut le voir sur la Fig. 1, un ensemble de calibrage de produits selon l'invention, comporte des premiers moyens de transport 1 qui seront également appelés moyens de transport, à brins parallèles, comportant des alvéoles ouverts dans leur partie inférieure, et dans lesquels sont disposés des produits P. L'ensemble selon l'invention comporte également un poste de pesage 2 comprenant des moyens de pesage constitués par example par une roue de pesage 3 entraînée en rotation par un motoréducteur 4. Une portion 3a de la roue de pesage 3 fait saillie dans les alvéoles des premiers moyens de transport 1 de manière à porter les produits lors de leur passage dans le poste de pesage.

La roue 3 et le motoréducteur 4 sont supportés par un dispositif de pesage 5 des produits ; ce dispositif étant lui-même supporté par exemple par le châssis de l'ensemble. Ce dispositif permet de déterminer le poids réel des produits en faisant la soustraction du poids mesuré lorsqu'il n'y a pas de produit sur la roue, du poids mesuré lorsqu'il y en a.

L'ensemble selon l'invention comporte également un poste de calibrage 6 comportant plusieurs stations 7, 8 et 9 d'éjection des produits, des premiers moyens de transport 1 dans des moyens d'évacuation des produits, respectivement 10, 11 et 12, en fonction du poids de ceux-ci.

Des seconds moyens 13 de transport des produits, qui seront également appelés moyens d'alimentation, et des moyens 14 de transfert desdits produits des seconds moyens de transport 13 dans les alvéoles des premiers moyens de transport 1 sont également prévus pour assurer une alimentation automatique.

Ainsi qu'on peut le voir sur cette figure, ces moyens de transfert 14 sont avantageusement constitués par une roue de transfert interposée entre les premiers 1 et les seconds 13 moyens de transport. Cette roue sera décrite plus en détail par la suite.

Chaque station d'éjection comprend des moyens d'éjection respectivement 15, 16 et 17 qui sont actionnés par un dispositif de commande relié au dispositif de pesage 5 et à un dispositif de détection 18 de la position du produit par rapport aux stations d'éjection. Par ailleurs, un capteur 19 permet également de détecter la présence d'un fruit dans le poste de pesage pour déclencher la mesure.

Comme cela est représenté sur la Fig. 2 qui illustre le fonctionnement d'un ensemble selon l'invention, le dispositif de commande 20 reçoit une information du dispositif de détection 19 qui lui indique qu'un fruit est en position de pesage. Le dispositif de commande 20 déclenche alors le dispositif de pesage 5 afin qu'il effectue une mesure et le dispositif de commande reçoit de celui-ci la mesure correspondant au poids de l'ensemble roue-motoréducteur-produit à partir duquel il détermine le poids du produit. Ce poids est alors mémorisé par le dispositif de commande et en fonction de la position du produit, indiquée par le dispositif de détection 18, le dispositif de commande 20 actionne l'un des moyens d'éjection 15, 16, 17 en fonction du poids du produit afin d'éjecter le produit dans les moyens d'évacuation correspondant au calibre de poids déterminé. Les différents moyens décrits ci-dessus ne présentant pas de difficultés particulières de mise en oeuvre, on ne les décrira pas plus en détail.

Les produits qui sont tout d'abord disposés sur les moyens de transport ou moyens d'alimentation 13 sont transportés par ceux-ci jusqu'à la roue de transfert 14 qui assure leur transfert et leur positionnement un par un dans les alvéoles des moyens de transport 1 comme cela est illustré sur la Fig. 1. Les produits défilent alors dans le poste de pesage 2 et ils sont ensuite éjectés des premiers moyens de transport vers les moyens d'évacuation 10, 11 et 12, ce qui assure leur calibrage.

La vitesse de défilement de la roue de transfert 14 est au moins égale à la vitesse de défilement des seconds moyens 13 de transport et inférieure à la vitesse de défilement des premiers moyens de transport 1 de manière à coordonner les différents déplacements des produits sur les différents moyens de transport et de transfert.

Par ailleurs, la roue de pesage 3 et la roue de transfert 14 peuvent également comporter, sur leur périphérie, des lobes de réception des produits, de manière à faciliter le passage des produits sur les roues.

La roue de pesage et la roue de transfert peuvent comporter au moins deux disques de même diamètre écartés d'une distance inférieure à la dimension des produits de manière à assurer un bon support de ces produits.

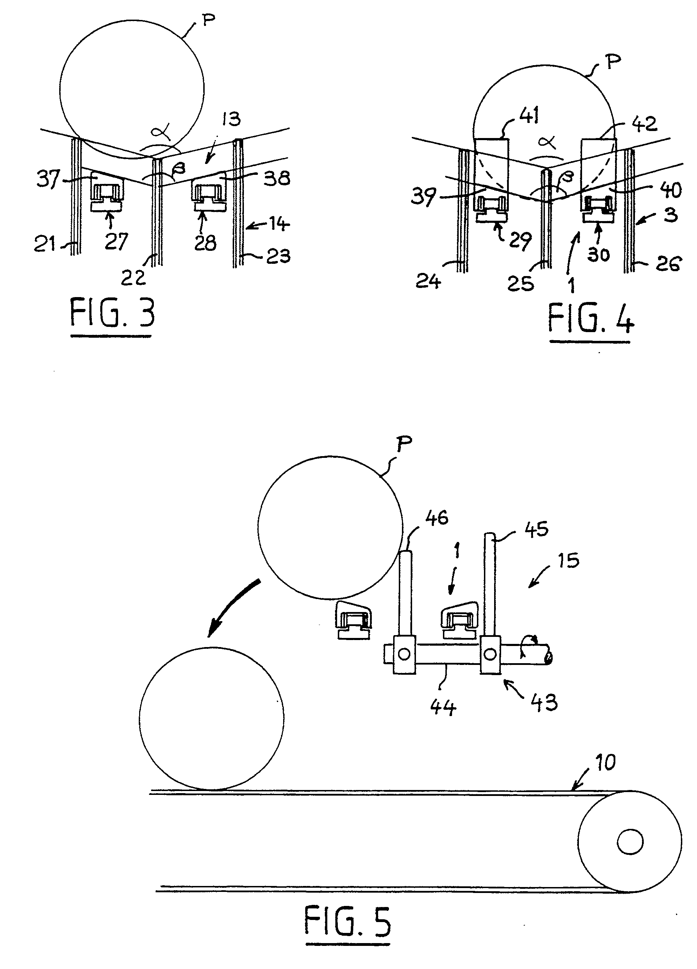

Ainsi qu'on peut le voir sur les Fig. 3 et 4, la roue de transfert 14 et la roue de pesage 3 peuvent comporter chacun trois disques, 21, 22, 23 et 24, 25, 26 respectivement, dont les deux disques disposés dans les positions extrêmes, c'est à dire les disques 21, 23 et 24, 26 respectivement, présentent le même diamètre, tandis que le disque interposé entre les deux premiers, c'est à dire les disques 22 et 25 respectivement, présentent un diamètre inférieur au diamètre des deux autres disques, de manière que les droites passant par la périphérie de ce disque et la périphérie de chacun des deux autres forment entre elles un angle $\alpha$ compris entre 100 et 180°, ceci afin d'assurer un bon support et un bon guidage latéral des produits.

Par ailleurs, les seconds 13 et les premiers 1 moyens de transport peuvent également comporter au moins deux éléments allongés de transport et de guidage latéral des produits, respectivement 27, 28 et 29, 30. Ces deux éléments de transport sont avantageusement parallèles et écartés l'un de l'autre d'une distance inférieure à la dimension des produits de manière à former un couloir de support et de guidage de ceux-ci, ces éléments formant, comme on peut le voir sur la Fig. 1, des boucles fermées autour de deux organes de guidage 31, 32 pour les seconds moyens de transport ou moyens d'alimentation 13 et de quatre organes de guidage 33, 34, 35, 36 pour les premiers 1.

Avantageusement, ces éléments de transport sont constitués par des chaînes sur les maillons desquelles sont fixés des organes de support 37, 38 et 39, 40 respectivement, sur les faces supérieures desquels prennent appui les produits, comme on peut le voir en particulier sur la Fig. 4.

Selon un mode de réalisation, les faces supérieures des organes de support 37, 38 et 39, 40 font respectivement entre eux un angle $\beta$ d'au moins 100°. Selon un mode de réalisation particulier, ces faces supérieures sont disposées dans un même plan.

Comme il est représenté sur la Fig. 4, les alvéoles des premiers moyens de transport 1 peuvent être délimités par des parties en saillie 41, 42 à partir des éléments de transport 29 et 30.

Chacun des moyens d'éjection, par exemple les moyens 15 représentés à la Fig. 5, comprend un actionneur 43 disposé sous les premiers moyens de transport 1 et dont l'arbre de sortie 44 comporte au moins un doigt d'éjection et dans l'exemple illustré deux doigts d'éjection 45, 46 décalés angulairement de manière à éjecter les produits P dans une direction déterminée, à la suite d'une commande de l'actionneur correspondant, sur les moyens d'évacuation par exemple 10.

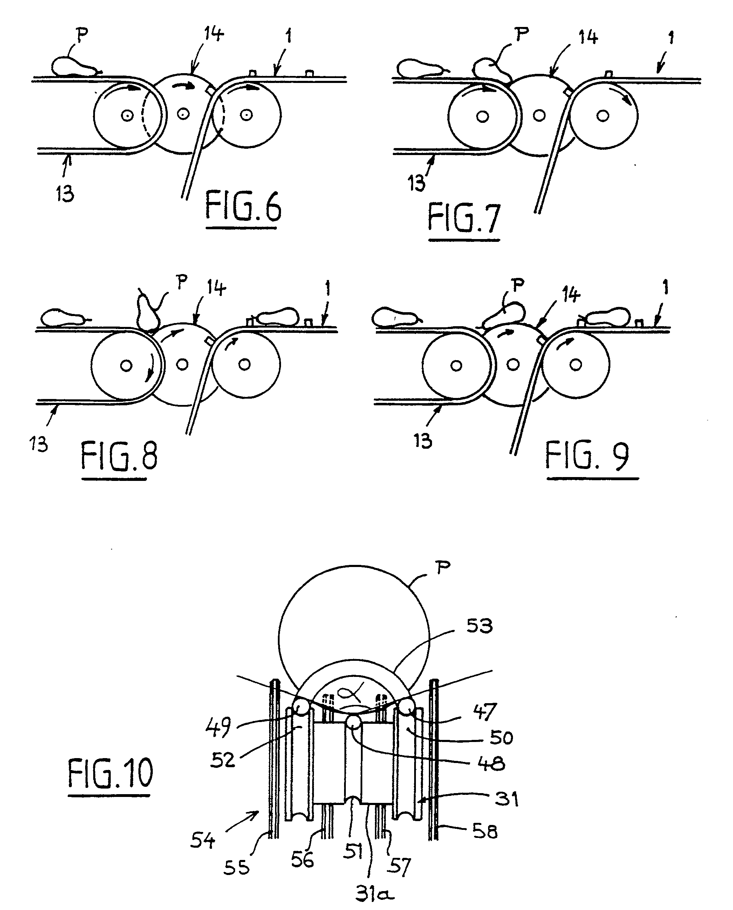

Les produits P représentés sur les figures peuvent être constitués par exemple par des oranges ou des pommes, de forme à peu près sphérique. Il est cependant à noter que l'ensemble selon l'invention convient également pour la pesée et le calibrage de produits tels que des poires ou des avocats présentant une première partie dont la forme correspond à peu près à une portion de sphère prolongée par une seconde partie de forme à peu près tronconique, et dans lesquels la première partie a une masse supérieure à la seconde. Dans ce cas, et comme il est représenté sur les Fig. 6 à 9, les seconds moyens de transport ou moyens d'alimentation 13 et la roue de transfert 14 constituent un dispositif de positionnement dans un sens déterminé de ces produits. En effet, l'intersection entre les seconds moyens de transport ou moyens d'alimentation 13 et la roue de transfert 14 forme un espace, de section en V évasé, de retournement des produits se présentant avec leur partie à peu près tronconique de plus faible masse à l'avant, sous l'effet du mouvement relatif des deux branches du V constituées par des portions en regard des seconds moyens de transport ou moyens d'alimentation 13 et de cette roue de transfert 14. Comme on l'a décrit précédemment, ces seconds moyens de transport ou moyens d'alimentation et les moyens de transfert comportent des moyens de guidage latéral des produits pour que leur axe soit toujours à peu près parallèle à l'axe de déplacement des seconds moyens de transport ou d'alimentation et des moyens de transfert, de sorte que le produit qui se présente avec la portion de forme à peu près tronconique à l'avant est redressé puis retourné et enfin dégagé de cet espace par la roue de transfert.

Il va de soi que la roue de transfert des produits peut être constituée par tout autre moyen de transfert déterminant avec les seconds moyens de transport ou moyens d'alimentation 13 l'espace de section en V évasé de retournement des produits.

Ainsi qu'il est représenté sur la Fig. 10, qui représente une variante de réalisation des moyens d'alimentation et/ou des premiers moyens de transport, ceux-ci peuvent être constitués, par trois éléments de transport 47, 48 et 49, constitués par exemple par des courroies cylindriques en matériau déformable disposées autour des moyens de guidage mentionnés précédemment.

Ces moyens de guidage par exemple 31 comportent alors trois gorges de guidage 50, 51, 52 dont l'une est ménagée dans une portion 31a de section réduite pour le guidage de l'élément de transport 48 disposé entre les deux autres, 47 et 49, afin que les plans tangents aux surfaces libres desdites courroies fassent entre eux un angle $\gamma$ d'au moins 100°.

Dans ce mode de réalisation, les alvéoles des premiers moyens de transport peuvent par exemple être constituées par des pièces 53 en forme de pont s'étendant entre les deux éléments de transport 47 et 49 disposés dans les positions extrêmes.

Ainsi que cela est représenté, la roue de pesage 54 et/ou la roue de transfert peuvent comporter quatre disques 55, 56, 57, 58 assurant un bon guidage des produits lors de leur transfert et/ou de leur pesage.

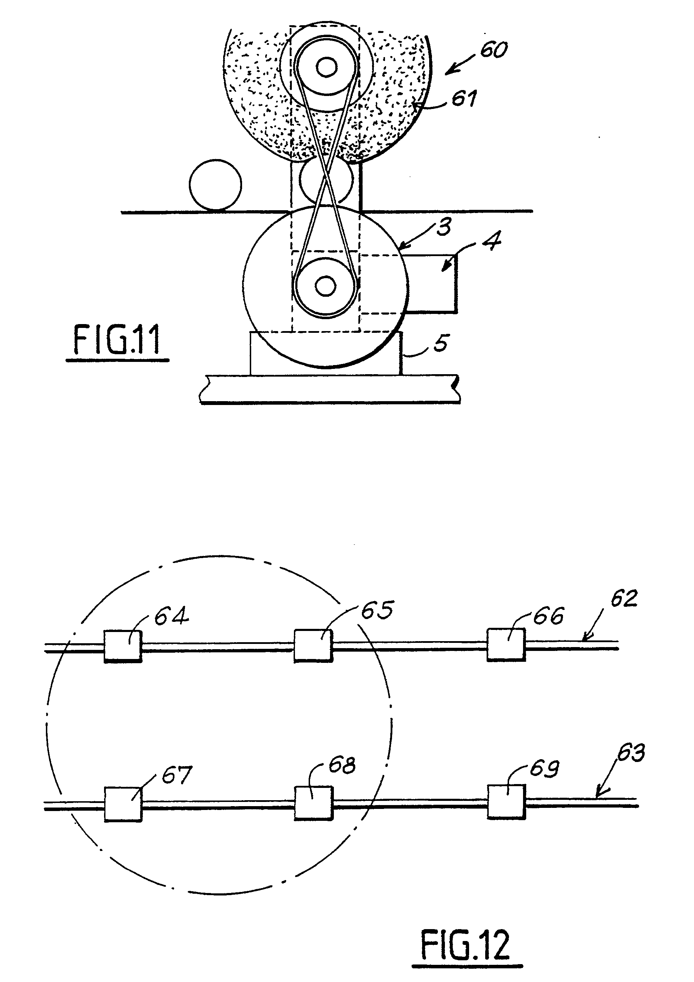

Comme on peut le voir sur la Fig. 11, qui représente une autre variante de réalisation des moyens de pesage entrant dans la constitution d'un ensemble selon l'invention, le poste de pesage 2 comprenant des moyens de pesage, décrits précédemment et constitués par exemple par la roue de pesage 3 entraînée en rotation par le motoréducteur 4, cette roue et ce motoréducteur étant supportés par le dispositif de pesage 5 des produits, peut également comporter des moyens 60 de préhension des produits lors de leur passage dans ce poste.

Avantageusement, les moyens de préhension 60 comprennent une roue auxiliaire 61 constituée d'un matériau déformable, comme par exemple du caoutchouc, disposée au-dessus de la roue de pesage 3 et d'axe parallèle à l'axe de celle-ci, de façon à ménager un passage de pesage de dimension inférieure à la taille des produits, entre ces deux roues.

La roue auxiliaire 61 est entraînée, à la même vitesse, en sens inverse de rotation de la roue de pesage 3 par le motoréducteur 4, par l'intermédiaire par exemple d'un système à poulies et courroie, de manière à assurer une bonne préhension des produits lors de leur passage dans le poste de pesage.

Ainsi qu'on peut le voir sur cette Fig., les produits sont donc pris entre la roue de pesage 3 et la roue auxiliaire 61 qui se déforme de manière élastique afin d'éviter toute détérioration des produits lors du passage des produits dans le poste de pesage.

Il est à noter que les roues de pesage 3 et auxiliaire 61 ont avantageusement le même diamètre initial, ce qui permet d'assurer une bonne préhension des produits dès l'arrivée de ces produits dans le poste de pesage et évite ainsi que des produits ronds, comme par exemple des oranges, ne tournent sur eux-mêmes en rencontrant la roue de pesage 3.

Il est également à noter que la roue auxiliaire 61 est portée par le dispositif de mesure 5 pour ne pas perturber la mesure.

Par ailleurs, ce dispositif permet également d'augmenter la précision de la mesure car les moyens de préhension permettent de bloquer le produit lors de son pesage.

Enfin, et comme on l'a représenté sur la Fig. 12, les moyens de transport peuvent également être constitués par des brins parallèles 62 et 63, tels que décrits précédemment, sur lesquels sont fixés des plots d'appui par exemple 64, 65, 66 et 67, 68, 69 respectivement, ces plots d'appui constituant quatre à quatre, des plots de support d'un produit représenté en traits pointillés sur cette Figure.

## Revendications

1. Ensemble de calibrage de produits (P), tels que des fruits, comportant des premiers moyens de transport (1) à brins parallèles comportant des alvéoles, et dans lesquels sont disposés les produits (P), un poste de pesage (2) comportant des moyens de pesage (3) supportés par un dispositif (5) de pesage du produit (P), un poste de calibrage (6) comprenant plusieurs stations d'éjection des produits, les premiers moyens de transport (1) transportant les produits (P) dans des moyens (10, 11 12) d'évacuation des produits en fonction du poids de ceux-ci, caractérisé en ce que les alvéoles sont ouvertes dans leur partie inférieure, en ce que les moyens de pesage (3) sont entraînés par un motoréducteur (4), une portion (3a) de ces moyens de pesage faisant saillie dans les alvéoles de manière à porter le produit (P) lors de son passage dans le poste de pesage et en ce que le motoréducteur est supporté par le dispositif (5) de pesage du produit.

2. Ensemble de calibrage selon la revendication 1, caractérisé en ce qu'il comporte des seconds moyens de transport (13) des produits et des moyens de transfert (14) desdits produits (P) des seconds moyens (13) de transport dans les alvéoles des premiers moyens de transport (1).

3. Ensemble de calibrage selon l'une quelconque des revendications précédentes, caractérisé en ce que les moyens de pesage (3) et/ou les moyens de transfert (14) comprennent, sur leur périphérie, des lobes de réception des produits.

4. Ensemble de calibrage selon la revendication 2 ou 3, caractérisé en ce que les moyens de transfert comprennent une roue de transfert (14) interposée entre les premiers et les seconds moyens de transport et en ce que les moyens de pesage comprennent une roue de pesage (3) entraînée en rotation par le motoréducteur (4).

5. Ensemble de calibrage selon l'une quelconque des revendications précédentes, caractérisé en ce que la roue de pesage (3) et/ou la roue de transfert (14) comprennent au moins deux disques (21, 22, 23, 24, 25, 26 ; 55, 56, 57, 58) écartés d'une distance inférieure à la dimension des produits (P).

6. Ensemble de calibrage selon la revendication 5, caractérisé en ce que la ou chaque roue comprend trois disques (21, 22, 23, 24, 25, 26), le disque (22, 25) interposé entre les deux autres présentant un diamètre inférieur au diamètre des deux autres disques de manière que des droites passant par la périphérie de ce disque et la périphérie de chacun des deux autres forment entre elles un angle ($\alpha$) compris entre 100 et 180°.

7. Ensemble de calibrage selon l'une quelconque des revendications 2 à 6, caractérisé en ce que la vitesse de défilement des moyens de transfert (14) est au moins égale à la vitesse de défilement des seconds moyens de transport (13) et inférieure à la vitesse de défilement des premiers moyens de transport (1).

8. Ensemble de calibrage selon l'une quelconque des revendications précédentes, caractérisé en ce que lesdits premiers (1) et/ou lesdits seconds moyens de transport (13) comprennent au moins deux éléments allongés (27, 28, 29, 30 ; 47, 48, 49) de transport et de guidage latéral des produits, parallèles et écartés l'un de l'autre d'une distance inférieure à la dimension des produits de manière à former un couloir de support et de guidage des produits, lesdits éléments formant des boucles fermées autour d'au moins deux organes de guidage (31, 32, 33, 34, 35, 36).

9. Ensemble de calibrage selon la revendication 8, caractérisé en ce que les deux éléments de transport (27, 28, 29, 30) sont constitués par des chaînes sur les maillons desquelles sont fixés des organes de support (37, 38, 39, 40) sur les faces supérieures desquels prennent appui les produits (P).

10. Ensemble de calibrage selon la revendication 9, caractérisé en ce que les faces supérieures des organes de support (37, 38, 39, 40) font entre elles un angle ($\beta$) d'au moins 100°.

11. Ensemble de calibrage selon la revendication 9, caractérisé en ce que les faces supérieures des organes de support sont disposés dans un même plan.

12. Ensemble de calibrage selon la revendication 8, caractérisé en ce que lesdits premiers et/ou lesdits seconds moyens de transport comprennent trois éléments de transport (47, 48, 49), en ce que lesdits éléments de transport sont constitués par des courroies cylindriques en matériau déformable et en ce que chacun desdits organes de guidage (31) comporte trois gorges (50, 51, 52) de guidage des éléments, dont l'une est ménagée dans une portion de section réduite (31a) pour le guidage de l'élément de transport (48) disposé entre les deux autres (47, 49), afin que les plans tangents aux surfaces libres desdites courroies fassent entre eux un angle ($\gamma$) d'au moins 100°.

13. Ensemble de calibrage selon l'une quelconque des revendications 8 à 12, caractérisé en ce que les alvéoles des premiers moyens de transport sont délimités par des parties en saillie (41, 42) à partir des éléments de transport (29, 30).

14. Ensemble de calibrage selon l'une quelconque des revendications 8 à 12, caractérisé en ce que les alvéoles des premiers moyens de transport sont délimités par des pièces en forme de pont (53) s'étendant entre deux éléments de transport (47, 49).

15. Ensemble de calibrage selon l'une quelconque des revendications précédentes, caractérisé en ce que les stations d'éjection (7, 8, 9) comportent des moyens d'éjection (15, 16, 17) desdits produits, actionnés par un dispositif de commande (20) relié au dispositif de pesage (5) et à un dispositif de détection (18) de la position dudit produit par rapport auxdits moyens d'éjection.

16. Ensemble de calibrage selon la revendication 15, caractérisé en ce que chacun des moyens d'éjection (15, 16, 17) comprend un actionneur (43) disposé sous les premiers moyens de transport (1) et dont l'arbre de sortie (44) comporte au moins un doigt d'éjection (45, 46) de manière à éjecter lesdits produits (P) dans une direction déterminée sur les moyens d'évacuation (10, 11, 12) à la suite d'une commande de l'actionneur.

17. Ensemble de calibrage selon l'une quelconque des revendications 4 à 16, caractérisé en ce que le poste de pesage (2) comporte des moyens de préhension (60) des produits lors de leur passage dans ce poste.

18. Ensemble de calibrage selon la revendication 17, caractérisé en ce que les moyens de préhension (60) comprennent une roue auxiliaire (61) en matériau déformable, disposée au-dessus de la roue de pesage (3), et d'axe parallèle à l'axe de cette roue, de façon à ménager un passage de pesage de dimension inférieure à la taille des produits, et entraînée en sens inverse de rotation de celle-ci par le motoréducteur (4) de manière à assurer une préhension des produits lors de leur passage dans le poste de pesage.

19. Ensemble de calibrage selon l'une quelconque des revendications précédentes, caractérisé en ce que les moyens de transport comprennent des brins parallèles (62, 63) sur lesquels sont disposés des plots (64, 65, 66, 67, 68, 69) de support des produits.

## Claims

1. Unit for grading produce (P), such as fruits, comprising first transporting means (1) with parallel belts, comprising receptacles and in which the produce (P) is arranged, a weighing station (2) comprising weighing means (3) supported by a device (5) for weighing the produce (P) and a grading station (6) comprising several stations for ejecting the produce, the first transporting means (1) transporting the produce (P) into the means (10, 11, 12) for removing the produce, as a function of the weight of the latter, characterized in that the receptacles are open in their lower part, that the weighing means (3) are driven by a geared motor (4) and a section (3a) of said weighing means projects into the receptacles so as to carry the produce (P) when it passes into the weighing station (2) and in that the geared motor is supported by the produce weighing device (5).

2. Grading unit according to Claim 1, characterized in that it comprises second means (13) for transporting produce and means for transferring (14) the said produce (P) from the second transporting means (13) into the receptacles of the first transporting means (1).

3. Grading unit according to either of the preceding Claims, characterized in that the weighing means (3) and/or the transferring means (14) comprise, on their periphery, flaps for receiving the produce.

4. Grading unit according to Claim 2 or 3, characterized in that the transferring means comprise a transferring wheel (14) inserted between the first and the second transporting means, and in that the weighing means comprise a weighing wheel (3) driven in rotation by the geared motor (4).

5. Grading unit according to any one of the preceding Claims, characterized in that the weighing wheel (3) and/or the transferring wheel (14) comprise at least two discs (21, 22, 23, 24, 25, 26 ; 55, 56, 57, 58) separated by a distance which is less than the size of the produce (P).

6. Grading unit according to Claim 5, characterized in that the wheel or each wheel comprises three discs (21, 22, 23, 24, 25, 26), the disc (22, 25) inserted between the two others having a diameter which is less than the diameter of the two other discs so that the straight lines passing via the periphery of this disc and the periphery of each of the two others together form an angle ($\alpha$) of between 100 and 180°.

7. Grading unit according to any one of Claims 2 to 6, characterized in that the speed of passage of the transferring means (14) is at least equal to the speed of passage of the second transporting means (13) and less than the speed of passage of the first transporting means (1).

8. Grading unit according to any one of the preceding Claims, characterized in that the said first (1) and/or the said second (13) transporting means comprise at least two elongated elements (27, 28, 29, 30, 47, 48, 49) for transporting and for laterally guiding the produce, which are parallel and separated from one another by a distance which is less than the size of the produce so as to form a support and guiding chute for the produce, the said elements forming loops which are closed around at least two guiding members (31, 32, 33, 34, 35, 36).

9. Grading unit according to Claim 8, characterized in that the two transporting elements (27, 28, 29, 30) consist of chains on whose links support members (37, 38, 39, 40) are fixed, on the upper faces of which the produce (P) bears.

10. Grading unit according to Claim 9, characterized in that the upper faces of the support members (37, 38, 39, 40) together form an angle (β) of at least 100°.

11. Grading unit according to Claim 9, characterized in that the upper faces of the support members are arranged in one and the same plane.

12. Grading unit according to Claim 8, characterized in that the said first and/or the said second transporting means comprise three transporting elements (47, 48, 49), in that the said transporting elements consist of cylindrical belts in a deformable material, and in that each of the said guiding members (31) comprises three grooves (50, 51, 52) for guiding the elements, one of which is arranged in a section (31a) of reduced cross-section for guiding the transporting element (48) arranged between the two others (47, 49) so that the planes which are tangent to the free surfaces of the said belts together form an angle (γ) of at least 100°.

13. Grading unit according to any one of Claims 8 to 12, characterized in that the receptacles of the first transporting means are delimited by parts (41, 42) projecting from the transporting element (29, 30).

14. Grading unit according to any one of Claims 8 to 12, characterized in that the receptacles of the first transporting means are delimited by pieces (53) in the shape of a bridge extending between two transporting elements (47, 49).

15. Grading unit according to any one of the preceding Claims, characterized in that the ejection stations (7, 8, 9) comprise means (15, 16, 17) for ejecting the said produce driven by a control device (20) connected to the weighing device (5) and to a device (18) for detecting the position of the said produce with respect to the said ejection means.

16. Grading unit according to Claim 15, characterized in that each of the ejection means (15, 16, 17) comprises an actuator (43) arranged below the first transporting means (1) and whose exit shaft (44) comprises at least one ejection finger (45, 46) so as to eject the said produce (P) in a specific direction onto the removal means (10, 11, 12) following a command from the actuator.

17. Grading unit according to any one of Claims 4 to 16, characterized in that the weighing station (2) comprises means (60) for gripping the produce when it passes into this station.

18. Grading unit according to Claim 17, characterized in that the gripping means (60) comprise an auxiliary wheel (61) in a deformable material arranged above the weighing wheel (3) and with an axis which is parallel to the axis of this wheel, so as to provide a weighing passage of a size which is less than the size of the produce and is driven in the opposite direction of rotation to the latter by the gear motor (4) so as to provide a gripping of the produce when it passes into the weighing station.

19. Grading unit according to any one of the preceding Claims, characterized in that the transporting means comprise parallel belts (62, 63) on which studs (64, 65, 66, 67, 68, 69) for supporting the produce are arranged.

## Patentansprüche

1. Einrichtung zum Sortieren von Produkten (P), wie Früchten, mit ersten Transportmitteln (1) mit parallelen Bändern, welche Zellen aufweisen und in welchen die Produkte (P) angeordnet sind, einer Wiegestelle (2), welche Wiegemittel (3) aufweist, die von einer Wiegevorrichtung (5) für das Produkt (P) abgestützt werden, einer mehrere Auswerfstationen für die Produkte aufweisenden Sortierstelle (6), wobei die ersten Transportmittel (1) die Produkte (P) in Mittel (10, 11, 12) zum Abziehen der Produkte in Abhängigkeit vom Gewicht derselben transportieren, dadurch gekennzeichnet, daß die Zellen in ihrem unteren Teil offen sind, daß die Wiegemittel (3) durch eine Motor-Getriebekombination (4) angetrieben werden, wobei ein Abschnitt (3a) dieser Wiegemittel in die Zellen vorspringt, derart, daß sie das Produkt (P) während des Wiegens desselben in der Wiegestelle trägt, und daß die Motor-Getriebekombination von der Wiegevorrichtung (5) für das Produkt abgestützt wird.

2. Sortiereinrichtung nach Anspruch 1, dadurch gekennzeichnet, daß sie zweite Transportmittel (13) für Wie Produkte und Umsetzmittel (14) zum Umsetzen der Produkte (P) von den zweiten Transportmitteln (13) in die Zellen der ersten Transportmittel (1) umfaßt.

3. Sortiereinrichtung nach irgendeinem der vorstehenden Ansprüche, dadurch gekennzeichnet, daß die Wiegemittel (3) und/oder die Umsetzmittel (14) auf ihrem Umfang Aufnahmeausschnitte für die Produkte aufweisen.

4. Sortiereinrichtung nach Anspruch 2 oder 3, dadurch gekennzeichnet, daß die Umsetzmittel ein Umsetzrad (14) aufweisen, welches zwischen den ersten und zweiten Transportmitteln liegt, und daß die Wiegemittel ein Wiegerad (3) umfassen, welches durch die Motor-Getriebekombination (4) drehend angetrieben wird.

5. Sortiereinrichtung nach irgendeinem der vorstehenden Ansprüche, dadurch gekennzeichnet, daß das Wiegerad (3) und/oder das Umsetzrad (14) wenigstens zwei Scheiben (21, 22, 23, 24, 25, 26 ; 55, 56, 57, 58) aufweisen, die in einem Abstand auseinanderliegen, der kleiner als die Ausdehnung der Produkte (P) ist.

6. Sortiereinrichtung nach Anspruch 5, dadurch gekennzeichnet, daß das oder jedes Rad drei Scheiben (21, 22, 23, 24, 25, 26) umfaßt, wobei die zwischen den beiden anderen liegende Scheibe (22, 25) einen Durchmesser aufweist, der kleiner als der Durchmesser der beiden anderen Scheiben ist, so daß durch den Umfang dieser Scheibe und den Umfang jeder der beiden anderen Scheiben gehende Geraden zueinander einen Winkel ($\alpha$) zwischen 100 und 180° bilden.

7. Sortiereinrichtung nach irgendeinem der Ansprüche 2 bis 6, dadurch gekennzeichnet, daß die Laufgeschwindigkeit der Umsetzmittel (14) wenigstens gleich der Laufgeschwindigkeit der zweiten Transportmittel (13) und kleiner als die Laufgeschwindigkeit der ersten Transportmittel (1) ist.

8. Sortiereinrichtung nach irgendeinem der vorstehenden ansprüche, dadurch gekennzeichnet, daß die ersten (1) und/oder zweiten Transportmittel (13) wenigstens zwei langgestreckte Elemente (27, 28, 29, 30 ; 47, 48, 49) zum Transport und zur seitlichen Führung der Produkte aufweisen, wobei die Elemente parallel und in einem Abstand auseinanderliegen, der kleiner als die Ausdehnung der Produkte ist, so daß ein Träger- und Führungskanal für die Produkte gebildet wird, wobei die Elemente geschlossene Schleifen um wenigstens zwei Führungsorgane (31, 32, 33, 34, 35, 36) bilden.

9. Sortiereinrichtung nach Anspruch 8, dadurch gekennzeichnet, daß die beiden Transportelemente (27, 28, 29, 30) durch Ketten gebildet sind, auf deren Gliedern Trägerteile (37, 38, 39, 40) befestigt sind, auf deren Oberseiten die Produkte (P) zur Anlage gelangen.

10. Sortiereinrichtung nach Anspruch 9, dadurch gekennzeichnet, daß die Oberseiten der Trägerteile (37, 38, 39, 40) zueinander einen Winkel ($\beta$) von wenigstens 100° bilden.

11. Sortiereinrichtung nach Anspruch 9, dadurch gekennzeichnet, daß die Oberseiten der Trägerteile in der gleichen Ebene angeordnet sind.

12. Sortiereinrichtung nach Anspruch 8, dadurch gekennzeichnet, daß die ersten und/oder zweiten Transportmittel drei Transportelemente (47, 48, 49) umfassen, daß die transportelemente durch zylindrische Riemen aus verformbarem Werkstoff gebildet sind, und daß jedes der Führungselemente (31) drei Kehlen (50, 51, 52) zur Führung der Elemente aufweist, von denen eine in einem Abschnitt verminderten Querschnitts (31a) zur Führung des zwischen den beiden anderen (47, 49) angeordneten Führungselements (48) ausgebildet ist, damit die Tangentialebenen an die freien Flächen der Riemen zueinander einen Winkel ($\gamma$) und wenigstens 100° einschließen.

13. Sortiereinrichtung nach irgendeinem der Ansprüche 8 bis 12, dadurch gekennzeichnet, daß die Zellen der ersten Transportmittel durch von den Transportelementen (29, 30) vorspringende Teile (41, 42) begrenzt sind.

14. Sortiereinrichtung nach irgendeinem der Ansprüche 8 bis 12, dadurch gekennzeichnet, daß die Zellen der ersten Transportmittel durch brückenförmige Teile (53), welche sich zwischen zwei Transportelementen (47, 49) erstrecken, begrenzt sind.

15. Sortiereinrichtung nach irgendeinem der vorstehenden Ansprüche, dadurch gekennzeichnet, daß die Auswerfstationen (7, 8, 9) Auswerfmittel (15, 16, 17) für die Produkte aufweisen, die durch eine Steuervorrichtung (20) betätigt werden, welche mit der Wiegevorrichtung (5) und einer Nachweisvorrichtung (18) zum Nachweisen der Position des Produkts in Bezug auf die Auswerfmittel verbunden sind.

16. Sortiereinrichtung nach Anspruch 15, dadurch gekennzeichnet, daß jedes der Auswerfmittel (15, 16, 17) ein unter den ersten Transportmitteln (1) angeordnetes Betätigungsglied (43) aufweist, dessen Ausgangswelle (44) wenigstens einen Auswerffinger (45, 46) aufweist, derart, daß die Produkte (P) in einer bestimmten Richtung auf die Abführmittel (10, 11, 12) auf eine Steuerung des Betätigungsgliedes hin ausgeworden werden.

17. Sortiereinrichtung nach irgendeinem der Ansprüche 4 bis 16, dadurch gekennzeichnet, daß die Wiegestelle (2) Greifmittel (60) zum Greifen der Produkte bei jedem Durchgang durch diese Stelle aufweisen.

18. Sortiereinrichtung nach Anspruch 17, dadurch gekennzeichnet, daß die Greifmittel (60) ein Hilfsrad (61) aus verformbarem Werkstoff umfassen, welches über dem Wiegerad (3) mit zur Achse dieses Rades paralleler Achse einen Wiegedurchgang mit unter der Größe der Produkte liegenden Ausdehnung ausbildend angeordnet ist und in umgekehrter Richtung zu diesem durch die Motor-Getriebekombination (4) angetrieben wird, um so ein Fassen der Produkte bei ihrem Durchgang durch die Wiegestelle zu gewährleisten.

19. Sortiereinrichtung nach irgendeinem der vorstehenden Ansprüche, dadurch gekennzeichnet, daß die Transportmittel parallele Riemen (62, 63) umfassen, auf welchen Klötze (64, 65, 66, 67, 68, 69) zum Abstützen der Produkte angeordnet sind.

FIG.1

FIG. 2

EP 0 283 388 B1

FIG. 3

FIG. 4

FIG. 5

FIG.6

FIG.7

FIG.8

FIG. 9

FIG.10

FIG.11

FIG.12